(19) Europäisches Patentamt

European Patent Office

Office européen des brevets

(11) **EP 1 020 817 A1**

## (12) EUROPEAN PATENT APPLICATION
published in accordance with Art. 158(3) EPC

(43) Date of publication:
**19.07.2000 Bulletin 2000/29**

(21) Application number: **98945552.2**

(22) Date of filing: **30.09.1998**

(51) Int. Cl.$^7$: **G06T 7/00**

(86) International application number:
**PCT/JP98/04422**

(87) International publication number:
**WO 99/17255 (08.04.1999 Gazette 1999/14)**

(84) Designated Contracting States:
**DE FR GB IT**

(30) Priority: **01.10.1997 JP 28315297**
**01.10.1997 JP 28315397**

(71) Applicant:
**Cyber SIGN Japan Incorporated**
**Tokyo 154-0015 (JP)**

(72) Inventor:
**CHAI, Toshiaki**
**c/o Cyber SIGN Japan Inc.**
**Setagaya-ku Tokyo 154-0015 (JP)**

(74) Representative:
**Kraus, Walter, Dr.**
**Kraus & Weisert,**
**Thomas-Wimmer-Ring 15**
**80539 München (DE)**

(54) **METHOD AND APPARATUS FOR AUTHENTICATING IC CARD**

(57)    When identifying the holder of an IC card mechanically, an illegal transaction using a false copy of signature data of the proprietor is prevented, and a stable coincidence rate is maintained in the mechanized verification of handwritten signature for the IC card.

The degree of difference of each element of data between the registered signature data stored in the IC card and verification signature data is measured, and it is determined whether the authentication should be done or not based on the measured degree of difference. Furthermore, the verification signature data is collated (for verification) with the registered signature data and the signature data used in the past, both stored in the IC card, and re-signature by the user is requested or authentication is rejected if they are in agreement.

The degree of difference of each element of data between the registered signature data stored in the IC card and verification signature data is measured, and the registered signature data is updated by use of data obtained through weighted averaging of the registered signature data and verification signature data permitted by authentication judgment performed on the basis of the measured degree of difference.

FIG.4

EP 1 020 817 A1

**Description**

TECHNICAL FIELD

The present invention relates to a method and apparatus for authenticating the holder (proprietor) of an IC card. More particularly, the present invention relates to a method and apparatus for preventing illegal use of an IC card, which could otherwise be performed through copying of signature data which are used in authentication of the user of an IC card by use of an electronic signature.

BACKGROUND ART

A variety of methods are used for authentication of individuals (hereinafter referred to as "personal authentication"). In public offices in Japan, personal seals are mainly used for personal authentication. However, means for personal authentication other than personal seals have recently come into acceptance.

As computer communications have come into widespread use and been popularized, problems have arisen in relation to secrecy. Personal authentication is used as one measure for securing secrecy. A principal technique used for personal authentication is use of a password. However, sole use of such a method is not necessarily sufficient for securing secrecy. Therefore, personal authentication by use of biometrics has recently attracted a great deal of attention as a method for identifying an individual.

Biometrics utilizes biological characteristics such as those of the subject's iris, DNA, voiceprint, or fingerprints. Handwriting is also considered to fall under the category of biological characteristics. Personal authentication by means of biometrics is advantageous because problems involved in use of personal seals, such as loss or theft, are eliminated. However, for the purpose of authenticating the user of a card, at the present time use of biological characteristics other than handwriting is not practical, in view of technical and economical considerations.

Personal authentication is important in the case of cards such as bank cards and credit cards, because the user of a card must be confirmed to be the holder (i.e., the person to whom the card has been issued). However, at present, importance is placed on confirmation of the financial status of a person, and personal authentication is generally not performed

A terminal that accepts cards is connected via a network to a host computer of a financial institution. The balance held by the financial institution, presence/absence of a report of a missing card, credit standing, etc. are checked by the host computer, and on the basis of the results, transactions such as issuance of cash and lending of money are performed.

At present, use of magnetic cards is prevalent, and in many cases personal authentication is performed by use of a password. Also, there has been proposed use of IC cards in place of magnetic cards in order to strictly check for illegal use of a card, which could be performed through illegal copying of a card or forgery of a signature.

Information on a card is processed by computer, regardless of whether the card is a magnetic card or an IC card. Whereas authentication of the user of a cash card issued by a bank is mainly performed by use of a password, in the case of a credit card, a signature is used for personal authentication.

Authentication of the user of an IC card on the basis of handwriting is performed as follows. Handwriting (a signature in ordinary cases) is registered in an IC card, and a signature produced by the user of the card at the time of use is collated with the registered handwriting or signature for verification. Such authentication of the user of an IC card on the basis of a handwritten signature inevitably involves fear of signature data being illegally copied and used. For example, an employee at a shop that accepts IC cards may alter a signature data verifier in order to illegally copy data of a signature made by the holder of an IC card and may illegally issue an invoice to a credit company by use of the copied signature data. Although such illegal copying and use of signature data requires large-scale alteration, such illegal conduct is somewhat likely to occur.

Handwriting has an advantage of being difficult for other persons to imitate. In addition, handwritten signatures depend on the individual's characteristics, and a person is very unlikely forget how to make his/her signature. However, if handwriting is examined by the naked eye, the examiner must have a great deal of experience, and the results of the examination depend on the power of observation of the examiner. As has been described in relation to prior art techniques, in Japan, personal authentication by use of a handwritten signature performed for use of a credit card is superficial and is a long way from constituting true personal authentication by use of a signature.

Because of the above-described reasons, automation is essential for realizing reliable personal authentication by use of a handwritten signature, without involving dependence on the individual skills of the examiner. Personal authentication by use of a handwritten signature is relatively immune from forgery, because an individual's signature reflects his/her personal characteristics. However, handwriting varies from signature to signature, depending on the mental condition of the signer, the environment where the signer signs his/her name, and other factors. Therefore, when personal authentication is automated, the above-described characteristics must be taken into consideration in order to achieve stable verification results. Also, the fact that handwriting changes with time must be taken into consideration in personal authentication by use of a handwritten signature.

An object of the present invention is to develop a method which enables automated authentication of the user of an IC card and prevents illegal transactions which could otherwise be performed through illegal copying of signature data by a person other than the holder of the card. Another object of the present invention is to develop a method for maintaining a stable verification rate in automated verification of handwritten signatures.

DISCLOSURE OF THE INVENTION

In order to solve the above-described problems, the present invention utilizes an IC card and an electronic signature. A user is requested to sign on an electronic tablet by use of an electronic pen, and on the basis of the signature, a judgment is made as to whether the user is the holder (proprietor) of the IC card. The method will be described below. In the following description, signature data used as a reference for verification will be referred to as "registered signature data," and signature data to be collated will be referred to as "verification signature data."

When an IC card storing registered signature data is to be authenticated, a degree of difference obtained from differences in respective elements between verification signature data and the registered signature data stored in the IC card is measured; and on the basis of the measured degree of difference, a judgment is made as to whether the IC card is authenticated. Further, for verification, the verification signature data are collated with the registered signature data and with signature data used in the past, both stored in the IC card, and when substantially perfect coincidence is found, the authentication is denied.

When an IC card storing registered signature data is to be authenticated, a degree of difference obtained from differences in respective elements between verification signature data and the registered signature data stored in the IC card is measured; and the registered signature data are updated by use of data obtained through weighted averaging of the registered signature data and verification signature data set which has passed a verification test performed on the basis of the measured degree of difference.

The signature data used in past may be stored in any of various compressed/converted forms, and a checksum form may be used as well. The signature data may be of any type. However, use of signature data composed of time-series data of coordinates of character handwriting and writing pressure can improve the reliability of the authentication.

The present invention will be described in more detail. In the following description, a scheme utilizing time-series data of coordinates of handwriting and writing pressure will be described; however, the present invention is not limited thereto. When a person has obtained an IC card and thereby becomes a holder, the holder first registers into the IC card signature data that serve as a basis for signature verification. This procedures is performed as follows. First, the person who is to become the holder of the card signs his/her name a plurality of times on an electronic tablet by use of an electronic pen, in order to create a plurality of signature data sets. From the signature data sets, characteristics that are peculiar to the person and required for authentication are extracted to thereby create registered signature data, which is then stored in the IC card. The thus-created registered signature data contains, as time-series data, shape information (x and y coordinates of handwriting) and writing pressure information (writing pressure p coordinate).

When the IC card is used, on a computer, data of a signature that the user produced at the site where the card is used is collated (for verification) with the registered signature data stored in the IC card in order to check whether the user is the holder of the IC card.

When the result of the verification indicates that the newly-created signature data does not coincide with the registered signature data, the user is not acknowledged as the holder of the IC card, and use of the IC card is denied. In cases other than the above, the user is acknowledged as the holder of the IC card. According to a conventional technique, a transaction by use of the IC card is performed at this point. By contrast, in the present invention, for verification, the verification signature data set is further collated with signature data sets used in the past (historical signature data sets). When substantially perfect coincidence is found between the verification signature data set and any one of the historical signature data sets, the verification signature data set is judged to have been illegally copied, or it is judged that a signer has signed in completely the same handwriting because of the signer's exceptional manual dexterity. In this case, re-signing is requested, or authentication is denied. When substantially perfect coincidence is found between the verification signature data set and any one of the historical signature data sets even after re-signing is performed a predetermined number of times, the signature data is determined to have been copied illegally. In this case, the user is not acknowledged as the holder of the IC card. Needless to say, when the data set from re-signature fails a verification test in which the data set from re-signature is collated (for verification) with the registered signature data, the user is not acknowledged as the holder of the IC card.

The verification signature data set is judged to have passed the verification test completely only when a sufficient degree of coincidence is found between the verification signature data set and the registered signature data and substantially perfect coincidence is not found between the verification signature data set and any of the historical signature data sets. The verification signature data set that has passed the verification test is registered in the IC card as a new set of historical signature data. The historical signature data composed of a plurality of past data sets is registered in the IC card after being converted into a compressed form; i.e., a check-sum form.

In order to realize the above-described method, an IC card verification apparatus (basically, a handwritten character recognition apparatus) is provided as hardware at a site where IC cards are handled. The card verification apparatus comprises an IC card reader/writer and a software program for realizing the method of the present invention. A communication interface (I/F) is attached to the IC card verification apparatus. For a user that has passed a verification test, the IC card verification apparatus requests, via a computer network, that a financial institution such as a credit company check the financial status of the user. After having passed the check, the user can effect a transaction.

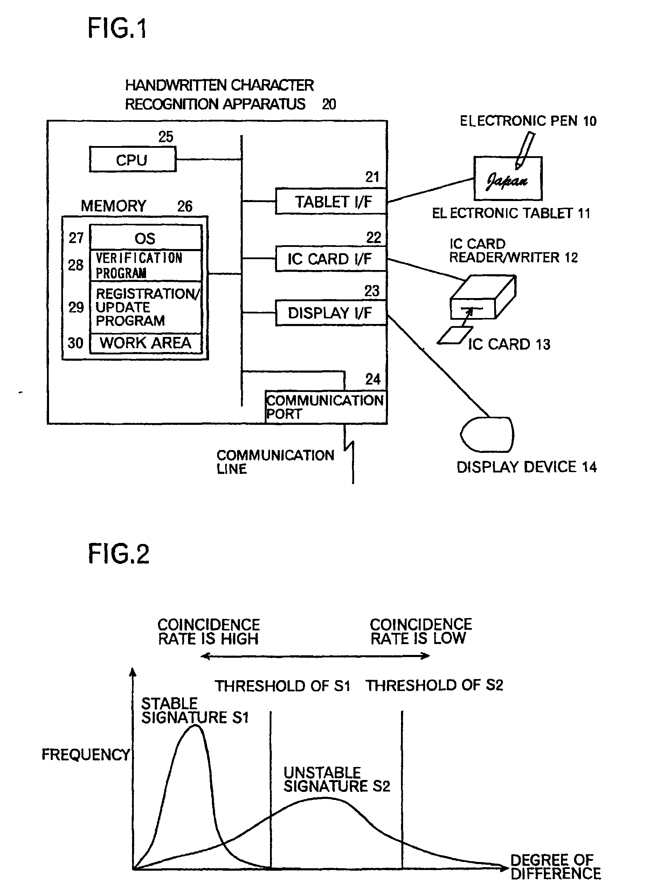

The procedure for authenticating the user of an IC card will be described with reference to FIG. 1, which shows the hardware structure of the card verification apparatus. In the following example, it is assumed that the user of the IC card is a customer; the person who performs authentication is a clerk at a shop that accepts IC cards; the issuer of the IC card is a credit company; and the customer makes a payment for purchased goods by use of a credit card (IC card).

First, the clerk causes an IC card input/output device (IC card reader/writer) 12 to read an IC card 13 presented by the customer. Information read from the IC card 13 is stored in a work area 30 via an IC card I/F 22. Simultaneously, a message "Request Signature" is displayed on a display device 14 via a display I/F 23. According to this message, the clerk requests the customer to sign his/her name.

The customer signs on an electronic tablet 11 by use of an electronic pen 10. The thus-obtained signature data set is sent to the work area 30 via a tablet I/F 21 and is temporarily stored therein. The data read from the IC card include registered signature data and historical signature data. First, the verification signature data set is collated with the registered signature data for verification, and upon passing the verification test, the verification signature data set is then collated with the historical signature data for verification. When substantially perfect coincidence is found between the verification signature data set and the historical signature data, this fact is displayed on the display device 14, and re-signing is requested.

Signature data obtained through re-signing is checked in a similar manner, and when substantially perfect coincidence is found between the signature data set newly obtained and the historical signature data, the verification signature data set is determined to have been copied illegally. In this case, the customer is not acknowledged as the legal holder of the IC card (note that the number of re-signing operations depends on the situation in which the card is used; the details are shown in a flowchart which will be described later). Of course, when the re-signature data set fails the verification test in which the re-signature data set is collated with the registered signature data for verification, a message indicating this fact is displayed on the display device 14, and use of the IC card is denied.

When the verification signature data set has passed the above-described verification test, customer information is transmitted to the credit company via a communication port 24 in order to inquire about the reliability, etc., of the customer. When a reply indicating "no problem" is returned, the transaction is effected.

After the transaction is effected, the verification signature data set is registered in the IC card, as new historical signature data, from the IC card reader/writer 12 shown in FIG. 1. The program used at this time is a registration/update program 29. When the transaction is not effected, this processing is not performed.

The manner of handling signature data will be described in further detail. First, a method of registering registered signature data will be described.

When the customer (the holder of the IC card) registers registered signature data, the customer signs a plurality of times in order to create a plurality of signature data sets. Some of the signature data sets are selected and averaged in order to create a candidate for registered signature data. This candidate is collated with each signature data set. When each signature data set has a coincidence rate greater than a predetermined level, the candidate for registered signature data is registered in the IC card as proper registered signature data.

At this time, by the action of the registration/update program 29 shown in FIG. 1, the registered signature data is sent to the IC card reader/writer 12 to be written into the IC card 13. Also, a verification program 28 creates registered signature data at the time of initial registration and processes signature data obtained from a signature written on the electronic tablet 11 by use of the electronic pen 10. For a person whose signature is always stable, the signature registration processing typically ends at this stage.

When there exists a signature whose coincidence rate is lower than a passing level, the customer is requested to sign m times more. At this stage, (n+m) sets of signature data are present, including the previously input signature data sets. First, one of the signature data sets is selected and collated with other signatures. This processing is performed for all signatures, and a plurality of signatures having the highest coincidence rates are selected (specifically, a plurality of signatures are selected in descending order of coincidence rate) and are averaged in order to create a candidate for registered signature data. Further, the candidate is collated with other signature data sets, and signature data sets which have passed a verification test are selected. Subsequently, the candidate for registered signature data and the selected signature data sets are averaged in order to create registered signature data, which are then registered in the IC card.

As is apparent from the above description, the frequency distribution of cumulative errors varies between a person who can sign stably and a person who cannot sign stably. For example, as shown in FIG. 2, the frequency distribution of cumulative error changes between stable signature S1 and unstable signature S2. Although the frequency distribution is not necessarily a normal distribution, a peak (the crest of the frequency distribution) is typically present near the centroid (corresponding to a degree of difference (cumulative error) bisecting the area of distribution).

When a threshold value for identifying a person from his/her handwritten signature is set at such a position as to cover 90 to 95% of the frequency distribution, the boundary line naturally changes between a stable signature and an unstable signature. In the graph of FIG. 2, in the region to the left of a line indicating a threshold value (a verification test pass region), a signature is determined to have been signed by a person himself, whereas in the region to the right of the line (a verification test failure region), the signature is determined not to have been signed by the person himself. Registered signature data and a threshold value are registered as a pair in the IC card, and are used when the registered signature data are compared (collated) with a verification signature data set.

Since the registered signature data include positional coordinates (shape information; (x, y)) and writing pressure coordinates (writing pressure information; p) as time-series data, the registered signature data P and the verification signature data set P' are represented as follows:

$$P = \{x_t, y_t, p_t\}_{t=1}^{N}$$

$$P' = \{x_t', y_t', p_t'\}_{t=1}^{N}$$

where N is the total number of sample points.

Therefore, the cumulative error D (degree of difference D) is represented as follows:

$$D^2 = |P - P'|^2$$
$$= \Sigma (|x_t - x_t'|^2 + |y_t - y_t'|^2 + |p_t - p_t'|^2)$$

where $\Sigma$ is the sum for t=1 to N.

However, since the size, inclination, and character pitch of handwritten characters are not necessarily stable and constant, correspondence cannot be simply established between the coordinate values of P and the coordinate values of P' as in the above-described equation, even when the size and inclination of characters are normalized for each signature data set. In order to solve this problem, the present invention uses the following Equation 1 and Equation 2. Equation 1 represents the degree of difference between the m-th character of registered signature data A and the corresponding character of verification signature data set B.

$$d_s(m) = \frac{\sum_{k=Ls(m)}^{Le(m)} \left\{ (1 - w_p) \cdot \left| z^\bullet_A(k) - z^\bullet_B(\tau(k)) \right|^2 + w_p \cdot \left| p^\bullet_A(k) - p^\bullet_B(\tau(k)) \right|^2 \right\}}{Le(m) - Ls(m) + 1} \qquad \text{Eq. 1}$$

Equation 2 represents the overall degree of difference of the signature; i.e., a normalized degree of difference obtained through a calculation in which the sum of the degrees of difference for the respective characters is divided by the total number of data points of the characters.

$$D(A, B) = \frac{\sum_{k=1}^{M} d_s(m) \cdot (Le(m) - Ls(m) + 1)}{\sum_{k=1}^{M} (Le(m) - Ls(m) + 1)} \qquad \text{Eq. 2}$$

where $L_s(m)$, $L_e(m)$ respectively represent the start and end points of the m-th character, M represents the number of characters, $w_p$ represents a weighting coefficient, $\tau(k)$ represents a skew function at the k-th sample point of the m-th character, and $z^*$ and $p^*$ respectively represent normalized positional coordinates and a normalized writing pressure coordinate. The coefficient $w_p$ satisfies the following relation:

$$0 \leq w_p \leq 1 .$$

Through adjustment of this coefficient, the effect of writing pressure information on authentication judgment is varied. $z^*$ represents the following complex coordinates:

$$z^* = x^* + iy^*$$

$$i = SQRT(-1) \text{ (the square root of -1).}$$

The skew function $\tau$ is a function for minimizing the cumulative error of handwritten signature data. The positional coordinates and writing pressure coordinate of the signature data B corrected by use of this function are $z^*_B(\tau(k))$ and $p^*_B(\tau(k))$. In other words, the cumulative error can be minimized through selection of a coordinate point $\{(z^*_B(\tau(k)), p^*_B(\tau(k))\}$ of the signature data B that corresponds to a coordinate point $\{(z^*_A(\tau(k)), p^*_A(\tau(k))\}$ of the signature data A.

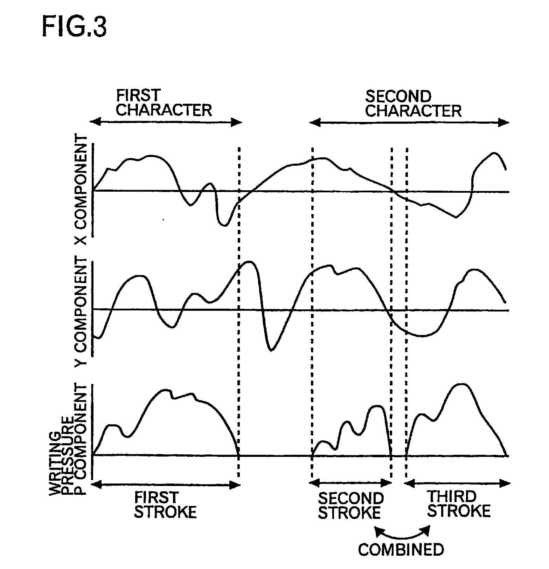

The number of characters can be obtained from the writing pressure information, an example of which is shown in FIG. 3. As shown in FIG. 3, characters are separated from one another while a portion where the writing pressure P becomes zero is used as a separation point. However, when the distance between adjacent strokes (e.g., second and third strokes of the second character) is less than a predetermined value, the two strokes are regarded as belonging to a single character. The start and end points of each section obtained through separation of characters are $L_s$ and $L_e$, respectively, and coordinates (including the pressure component) are provided for each section.

When the cumulative error D obtained in the above-described manner does not exceed a threshold value, the signature data set is judged to have passed a verification test. In all other cases, the signature data set is judged to have failed the verification test.

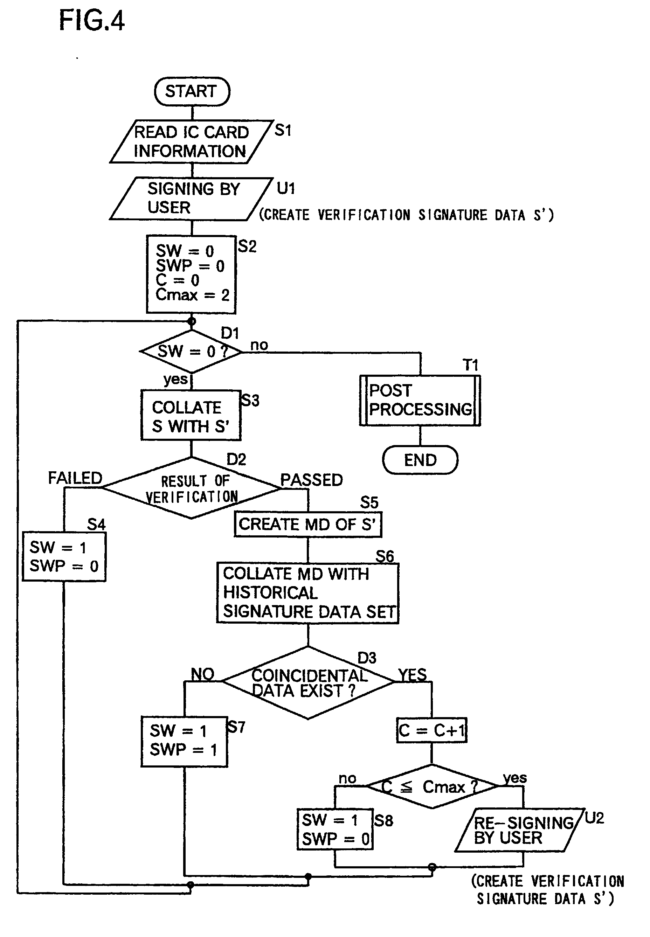

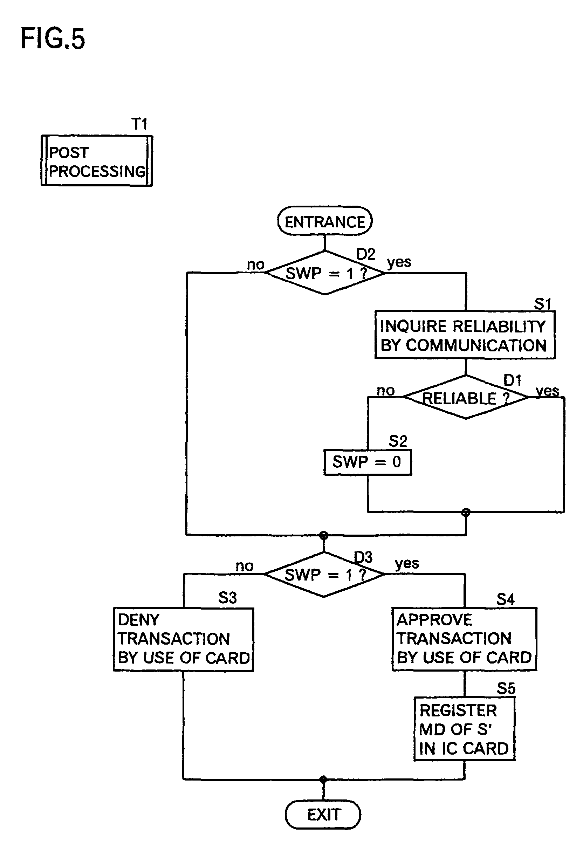

Although the manner of storing historical signature data sets will be described in connection with the following embodiment, the verification signature data that have passed the verification test are converted into a check-sum format. Subsequently, the verification signature data set is collated (for verification) with the historical signature data sets, and when the verification signature data set does not show substantially perfect coincidence with any of the historical signature data sets, an indication that the verification signature data set has passed the final verification test is issued. When the verification signature data set shows substantially perfect coincidence with any of the historical signature data sets, the verification signature data set is judged to have possibly been copied, and re-signing is requested. When the same result is obtained with each repetition of a signing operation performed a designated number of times, the verification signature data set is judged as copied data. This authentication processing is shown in the flowcharts of FIGS. 4 and 5.

In the flowcharts, Sn represents internal processing of the computer, T1 represents a processing routine, and Un represents the user's signing operation. C represents the number of re-signing operations, Cmax represents a permissible number of times for re-signing operations, and MD represents a message digest (check sum). Since the historical signature data are stored in the form of MD, when the verification signature data set S' is collated (for verification) with the historical signature data, the verification signature data set S' is compared with the historical signature data after being converted into the MD format (processing at S5 and S6 of FIG. 4). When the verification signature data set S' has passed all the verification tests and is thus judged to be reliable, the MD of the verification signature data set S' is registered into the IC card as a historical signature data set (processing at S5 of FIG. 5).

When the verification signature data set S' has passed the verification test, a signer is acknowledged as the holder of the IC card, and a transaction by use of the IC card is performed. In the conventional technique, the IC card is returned to the user at this step, and the entire processing is judged to be completed. By contrast, in the present invention, in consideration of future signature verification, the registered signature data and the verification signature data set used for verification are subjected to weighted averaging in order to update the registered signature data.

For example, in the case of the registered signature data A and the verification signature data set B, the following calculation is performed, while a proper weighting coefficient w is introduced:

$$(1-w) \cdot A + w \cdot B \text{ where } 0 \leq w \leq 0.5$$

The thus-obtained data are regarded as new registered signature data A. The thus-updated or new registered signature data A are written into the IC card. This is a leaning function.

In order to realize the above-described method, an IC card verification apparatus is provided at a site where IC cards are handled. The card verification apparatus comprises an IC card reader/writer and a software program for realizing the method of the present invention. A communication interface (I/F) is attached to the IC card verification apparatus. When a user passes a verification test, the IC card verification apparatus requests, via a computer network, that a financial institution such as a credit company check the financial status of the user. After having passed the check, the user can effect a transaction.

The procedure for authenticating the user of an IC card will be described with reference to FIG. 1 showing the hardware structure of the card verification apparatus. In the following example, it is assumed that the user of the IC card is a customer; the person who performs authentication is a clerk at a shop that accepts IC cards; the issuer of the IC card is a credit company; and the customer makes a payment for purchased goods by use of a credit card (IC card).

First, the clerk causes the IC card input/output device 12 (IC card reader/writer) 12 to read an IC card 13 presented by the customer. Information read from the IC card 13 is stored in the work area 30 via the IC card I/F 22. Simultaneously, a message "Request Signature" is displayed on the display device 14 via the display I/F 23. In accordance with this message, the clerk requests the customer to sign his/her name. The customer signs on the electronic tablet 11 by use of the electronic pen 10.

The thus-obtained signature data is sent to the work area 30 via the tablet I/F 21 and is temporarily stored therein. The verification program 28 collates a signature data set obtained from a new signature with registered signature data read from the IC card, and displays the result of the verification on the display device 14. The verification test is performed such that when the accumulation of errors (cumulative error) between the registered signature data and the verification signature data set does not exceed a predetermined value, the verification signature data set is judged to have passed the test; i.e., the signer is judged to be the holder of the card, and in all other cases, the verification signature data set is judged to have failed the test; i.e., the signer is judged not to be the holder of the card.

When the verification signature data set has passed the above-described verification test, customer information is transmitted to the credit company via the communication port 24 in order to inquire about the reliability, etc., of the customer. When a reply indicating "no problem" is returned, the transaction is effected.

When the transaction by use of the IC card is completed, the registration/update program 29 starts. As a result, the verification signature data set is reflected in the registered signature data in order to create new registered signature data, which are sent to the IC card reader/writer 12 and written into the IC card 13.

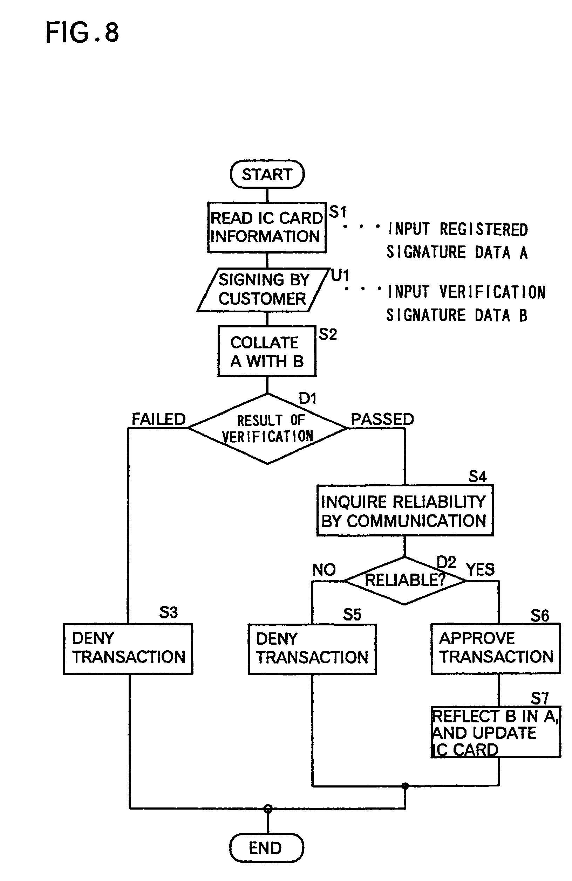

The above-described processing is shown in the flowchart of FIG. 8. In the flowchart, Sn represents internal processing, Un represents signing operation by a user (customer), and Dn represents judgment (n represents a consecutive number). When the verification signature data set B has failed the verification test where the verification signature data set B and the registered signature data A are collated with each other for verification, the transaction by use of the IC card is denied (processing at S3). When the verification signature data set B has passed the test, the credit company is inquired about the reliability of the card holder, by means of communications (processing at S4). When a reply indicating "Reliable" is returned, the transaction by use of the IC card is approved (processing at S6). When a reply indicating "Reliability Questionable" is returned, the transaction by use of the IC card is denied (processing at S5). During the process for transaction approval at S6, the amount of money for the transaction is reported to the credit company by means of communications. During the process for transaction denial at S3 and S5, no processing is performed for the transaction. Of course, a message indicating this fact is displayed on the display device in order to inform the clerk of the fact.

BRIEF DESCRIPTION OF THE DRAWINGS

FIG. 1 is a view of a hardware structure according to an embodiment of the present invention, which is required when authentication of the proprietor of an IC card is performed by means of verification of handwritten characters;

FIG. 2 is an explanatory diagram showing the relationship between signature characteristics (frequency distribution of cumulative error) of each person and a threshold value, used in the embodiment of the present invention;

FIG. 3 is an explanatory diagram showing a method of isolating characters from writing pressure information, used in the embodiment of the present invention;

FIG. 4 is a flowchart showing an algorithm for authenticating the proprietor of an IC card by means of a handwritten signature and a processing for eliminating illegal copy by use of historical signature data, which are used in the embodiment of the present invention;

FIG. 5 is a flowchart showing an algorithm for authenticating the proprietor of an IC card by means of a handwritten signature and a processing for eliminating illegal copy by use of historical signature data, which are used in the embodiment of the present invention (continued from FIG. 4);

FIG. 6 is a diagram for describing creation of a message digest used in the embodiment of the present invention;

FIG. 7 is a diagram showing the structure of a historical signature data table used in the embodiment of the present invention;

FIG. 8 is a flowchart showing electronic signature verification processing containing a learning function, used in the embodiment of the present invention; and

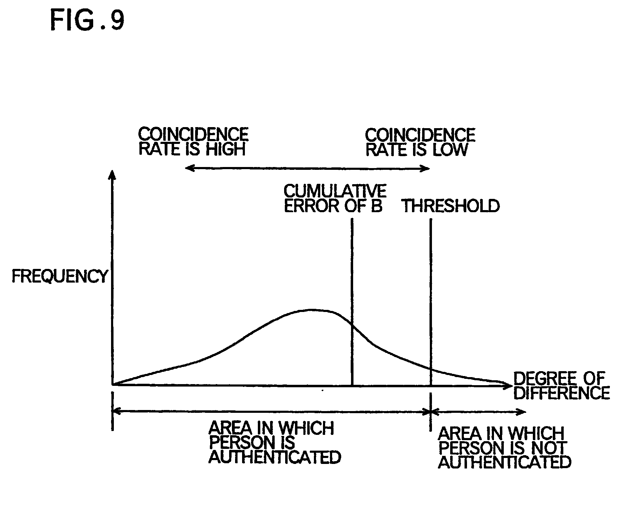

FIG. 9 is a graph showing the frequency distribution of cumulative errors and used for describing conditions of verification signature data which is used for update of registered signature data in the embodiment of the present invention.

BEST MODE FOR CARRYING OUT THE INVENTION

An exemplary method of storing historical signature data in an IC card will be described as an embodiment of the present invention. Registered signature data P are stored in the following format:

$$P = \{x_t, y_t, p_t\}_{t=1}^{N}$$

where N is the total number of sample points. Therefore, the historical signature data may be stored in this format. However, when historical signature data are collected over a certain period, six months or 1 year, the total volume of the data becomes huge. In view of this problem, in the present invention, a check sum of the verification signature data set is calculated in order to store the historical signature data in compressed form.

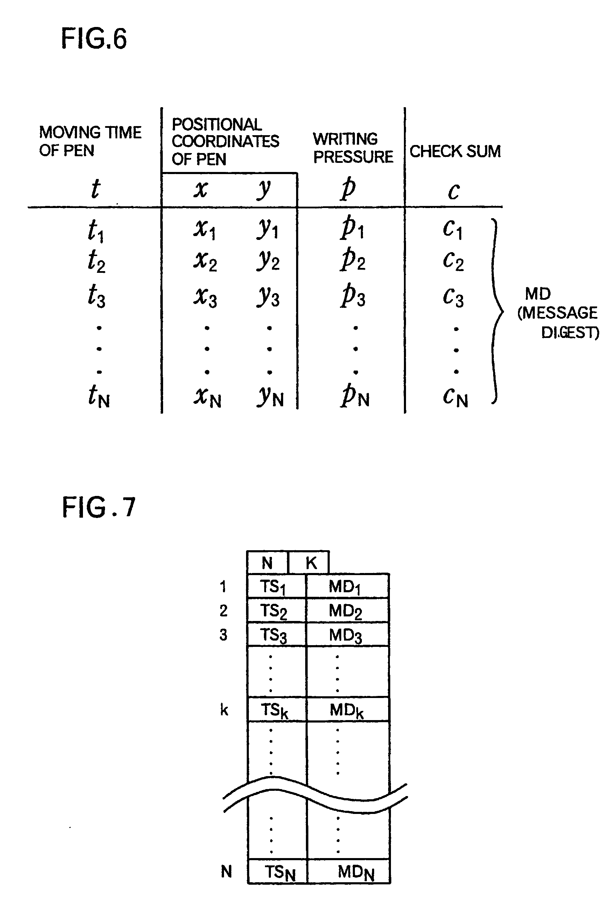

FIG. 6 shows an exemplary method of calculating the check sum. When a sample point corresponding to the moving time $t_k$ of the electronic pen is represented by k, the coordinates indicating position and writing pressure are represented by $(x_k, y_k, p_k)$. A check sum of the coordinates is represented by $C_k$. When the check sum is calculated, the data are compressed. Therefore, there is a possibility that the thus-calculated check-sum becomes equal to a check-sum calculated from different coordinate values. In order to solve this problem, in the present embodiment, a hash function—which is widely used in encryption—is used in order to obtain a unique result. That is, through use of a hash function h, the check sum $C_k$ is obtained as follows:

$$C_k = h(f(x_k, y_k, p_k))$$

where f is a proper function that is applied to the coordinates before use of the hash function. In a similar manner, a hash function calculation is performed for all the check sums $C_k$ in several steps, so that a final check-sum is created, which is called a "message digest MD." In the example of FIG. 6, the data of the coordinates are compressed to an ultimate size of 22 bytes.

FIG. 7 shows an example of a historical signature data table used when signature data are stored in the IC card, as well as an example format of the historical signature data. In FIG. 7, reference character N denotes a maximum number of items that can be registered (a maximum number of subscripts); k denotes the position (subscript) of the historical signature data set that has been registered most recently; TS denotes a time stamp, and MD denotes a message digest. The time stamp TS is a four-byte time stamp that represents the year, month, and date of registration (yymmdd) and a serial number (nn) that distinguishes signature data sets produced on the same day; i.e., yymmddnn. When the newest historical signature data set is stored at position k, the next data set is stored at position k+1. However, when the storage position reaches N, the next data set is stored at position 1.

As described above, after the historical signature data table is completely filled with data, a new data set is overwritten on the oldest data set. When the historical signature data sets are listed in the order of most recent to oldest, the following is obtained:

$$MD_k, MD_{k-1}, MD_{k-2} ...., MD_1, MD_N, MD_{N-1} ...., MD_{k+1}$$

When the verification signature data set MD is newly checked (collated with historical signature data for verification), the check operation is performed from the positions 1 to N, sequentially and unconditionally. If $MD=MD_i$ holds, the verification signature data set MD is judged to have been probably copied.

The manner of handling signature data will be described in further detail. First, a method of registering registered signature data will be described.

When the customer (the holder of the IC card) registers signature data, the customer signs a plurality of times in order to create a plurality of signature data sets. Some of the signature data sets are selected and averaged in order to create a candidate for registered signature data. This candidate is collated with each signature data set. When each signature data set has a coincidence rate greater than a predetermined level, the candidate for registered signature data is registered in the IC card as proper registered signature data.

At this time, by the action of the registration/update program 29 shown in FIG. 1, the registered signature data are sent to the IC card reader/writer 12 to be written into the IC card 13. Also, the verification program 28 creates registered signature data at the time of initial registration and processes a signature data set obtained from a signature written on the electronic tablet 11 by use of the electronic pen 10. For a person whose signature is always stable, the signature registration processing typically ends at this stage.

When there exists a signature whose coincidence rate is lower than a passing level, the customer is requested to sign m additional times. At this stage, (n+m) sets of signature data are present, including the previously input signature data sets. First, one of the signature data sets is selected and collated with other signatures. This processing is performed for all the signature data sets, and a plurality of signature data sets having the highest coincidence rate are selected (specifically, a plurality of signature data sets are selected in descending order of coincidence rate) and are averaged in order to create a candidate for registered signature data.

Further, the candidate is collated with other signature data sets, and signature data sets which coincide with the candidate are selected. Subsequently, the candidate and the selected signature data sets are averaged in order to create registered signature data, which is then registered in the IC card.

The initial registered signature data is prepared in a state in which a limited number of signature data sets are present. Although the registered signature data represent the characters of a signer, the number of samples is not sufficient. The measures for overcoming the drawback is the learning function of the present invention; i.e., the feedback of the verification signature data set used in verification to the registered signature data. Meanwhile, the signature itself, characteristic to the human nature producing the signature, changes with time. This means that use of fixed registered signature data does not cope with long-term changes in the signature. This is also the reason why the verification signature data set is fed back to the registered signature data.

The above-described feedback is performed by a method in which the following calculation is performed, while a proper weighting coefficient w is introduced:

$$(1-w) \cdot A + w \cdot B \text{ where } 0 \leq w \leq 0.5,$$

and the thus-obtained signature data set is used as the registered signature data. Since this update operation is performed only when the verification signature data set has passed a verification test, the registered signature data is not changed in an unfavorable direction. An unfavorable direction means that a frequency distribution of cumulative error of verification signature data with respect to the registered signature data becomes broader.

FIG. 10 shows the frequency distribution of cumulative error. The cumulative error of verification signature data set B that is fed back to the registered signature data does not exceed a threshold value, and the effect of the verification signature data set B is decreased by the weighting coefficient w, which is not greater than 0.5 (50%). Therefore, the registered signature data is not changed in an unfavorable direction. For example, when the verification signature data set B is reflected in the registered signature data A, while a weighting coefficient of 25% is used, new registered signature data A' can be obtained as follows:

$$A' = 0.75A + 0.25B.$$

When the registered signature data A is replaced with the new registered signature data A', the new registered signature data A' is not changed greatly by the verification signature data set B, because the degree of effect of the verification signature data set B on the registered signature data A' is small (0.25), and the values of the verification signature data set B are lower than the threshold value of the original registered signature data A. Further, the values of the registered signature data can be made closer to values that represent the signature characteristics of the signer, and the signature characteristics that change with time can be reflected in the registered signature data.

As described above, the learning function of the present invention provides a short-term action of improving initial registered signature data and a long-term action of rectifying the signature characteristics of a signer that changes with time. Thus, a constant coincidence rate can always be secured.

The advantage of personal authentication (authentication of the holder of an IC card) by means of a handwritten signature is that it is difficult for other persons to imitate the signature; since the signature is characteristic to the individual, it cannot be used illegally, unlike seals and passwords, and the holder is not required to carry anything. However, like passwords, the possibility of a signature being stolen is not zero. This is because of the possibility that, as described in the Background Art section, a handwritten character recognition apparatus is altered at a shop that accepts IC cards, signature data of authentic holders are copied illegally, and the copied data are used illegally.

Such an illegal copy requires large-scale alteration and therefore cannot be easily performed. However, when IC cards become popular in future, there will arise a possibility that a shop that accepts IC cards or one of its employees (or a crime syndicate) conducts such an illegal copying operation.

The method of authenticating the holder of an IC card by means of historical signature data according to the present invention is effective against such illegal conduct. The present invention premises that each signature used for identifying a signer represents well the features of the signer, and even the signer himself cannot sign with perfect consistency. However, a dexterous person may produce a signature that is identical with a signature produced in the past. Therefore, when a signature is detected as being identical with a signature made in the past, re-singing is requested.

Virtually nobody produces the same signature during the re-singing operation, which is one characteristic of signatures.

Another feature of the present invention resides in the method of storing historical signature data. In order to store the historical signature data within the memory of an IC card having limited capacity, in the present invention, the registered signature data are stored in the form of check-sum. This data compression enables the IC card to store data from the most recent period of several years, depending on the frequency of use of the card. The above-described feature prevents illegal use of the IC card, which would otherwise be possible through copying of signature data.

The advantage of personal authentication (authentication of the holder of an IC card) by means of a handwritten signature is that it is difficult for other persons to imitate the signature; since the signature is characteristic to the individual, it cannot be used illegally, unlike seals and passwords, and the holder is not required to carry anything. However, an individual's handwriting gradually changes with time. Although a signer immediately notices a significant change in his signature, he does not necessarily notice a minor change. It may occur that a signer can pass a verification test at the beginning, but at a certain time the matching rate abruptly becomes worse. This is caused by characteristics of the handwriting that change from day to day and from moment to moment.

Another factor to be considered when handwritten signatures are used is the stability of registered signature data itself. As described in connection with the embodiment of the present invention, registered signature data are created from a few signatures of a signer whose signature is stable, or from a dozen of signatures of a signer whose signature is not stable. Handwriting changes depending on the environment and the mental condition of the signer. Registered signature data created in an initial stage are created in a certain situation, and the probability of the registered signature data being biased is high. In order to solve this drawback, signature data created in various situations must be reflected in the registered signature data.

The learning function of the present invention solves the above-described problem. In the method for realizing the learning function of the present invention, registered signature data are changed on the basis of verification signature data sets that are created when the IC card is actually used. Therefore, data of signatures that are made in different environments and mental conditions are reflected in the registered signature data. In addition, only when a signer is acknowledged as the holder of a card by means of a verification test in which a verification signature data set is collated with the registered signature data for verification, the verification signature data set is used for updating the registered signature data, the registered signature data are not changed dynamically, and the registered signature data of the holder of the card are not replaced with data of signatures of other persons. Accordingly, the learning function of the present invention contributes to satisfying mandatory conditions for obtaining a constant coincidence rate. That is, on a short-term basis, the learning function improves the initial registered signature data, and on a long-term basis, the learning function absorbs changes in signature data caused by the characteristics of a signer which change with time, to thereby secure a constant coincidence rate.

INDUSTRIAL APPLICABILITY

The present invention is useful for preventing illegal use of an IC card, which would otherwise be possible through copying of signature data, when the holder of the IC card is authenticated by means of an electronic signature.

**Claims**

1. A method for authenticating an IC card in which are stored registered signature data, characterized by comprising the steps of:

   (1) measuring a degree of difference obtained from differences in respective elements between verification signature data and registered signature data stored in the IC card; and
   (2) judging, on the basis of the measured degree of difference, whether the IC card is to be authenticated, and collating the verification signature data with the registered signature data and signature data used in the past, both stored in the IC card, wherein when the verification signature data coincides with the registered signature data or the signature data used in the past, re-singing is requested, or the authentication is denied.

2. A method for authenticating an IC card according to Claim 1, characterized in that the signature data used in the past are stored in a compressed and converted form.

3. A method for authenticating an IC card according to Claim 1 or 2, characterized in that the signature data includes time-series data in relation to coordinates of handwritten characters and writing pressure.

4. An apparatus for authenticating an IC card in which are stored registered signature data, characterized by comprising:

(1) means for measuring a degree of difference obtained from differences in respective elements between verification signature data and registered signature data stored in the IC card; and

(2) means for judging, on the basis of the measured degree of difference, whether the IC card is to be authenticated, and collating the verification signature data with the registered signature data and signature data used in the past, both stored in the IC card, wherein when the verification signature data coincides with the registered signature data or the signature data used in the past, re-singing is requested, or the authentication is denied.

5. An apparatus for authenticating an IC card according to Claim 4, characterized in that the signature data used in the past are stored in a compressed and converted form.

6. An apparatus for authenticating an IC card according to Claim 4 or 5, characterized in that the signature data includes time-series data in relation to coordinates of handwritten characters and writing pressure.

7. A medium on which is recorded a program for authenticating an IC card in which are stored registered signature data, the program

(1) measuring a degree of difference obtained from differences in respective elements between verification signature data and registered signature data stored in the IC card; and

(2) judging, on the basis of the measured degree of difference, whether the IC card is to be authenticated, and collating the verification signature data with the registered signature data and signature data used in the past, both stored in the IC card, wherein when the verification signature data coincides with the registered signature data or the signature data used in the past, re-singing is required, or the authentication is denied.

8. A program-recorded medium according to Claim 7, characterized in that the signature data used in the past are stored in a compressed and converted form.

9. A program-recorded medium according to Claim 7 or 8, characterized in that the signature data includes time-series data in relation to coordinates of handwritten characters and writing pressure.

10. A signature-authentication-type IC card, characterized in that the IC card can store registered signature data and signature data used in the past.

11. A signature-authentication-type IC card according to Claim 10, characterized in that the signature data used in the past are stored in a compressed and converted form.

12. A method for authenticating an IC card storing registered signature data, characterized by comprising the steps of:

(1) measuring a degree of difference obtained from differences in respective elements between verification signature data and registered signature data stored in the IC card; and

(2) updating the registered signature data by use of data obtained through weighted averaging of the registered signature data and verification signature data permitted by authentication judgment performed on the basis of the measured degree of difference.

13. A method for authenticating an IC card according to Claim 1, characterized in that the signature data includes time-series data in relation to coordinates of handwritten characters and writing pressure.

14. An apparatus for authenticating an IC card storing registered signature data, characterized by comprising:

(1) means for measuring a degree of difference obtained from differences in respective elements between verification signature data and registered signature data stored in the IC card; and

(2) means for updating the registered signature data by use of data obtained through weighted averaging of the registered signature data and verification signature data permitted by authentication judgment performed on the basis of the measured degree of difference.

15. An apparatus for authenticating an IC card according to Claim 14, characterized in that the signature data includes time-series data in relation to coordinates of handwritten characters and writing pressure.

**16.** A medium on which is recorded a program for authenticating an IC card in which are stored registered signature data, the program

(1) measuring a degree of difference obtained from differences in respective elements between verification signature data and registered signature data stored in the IC card; and
(2) updating the registered signature data by use of data obtained through weighted averaging of the registered signature data and verification signature data permitted by authentication judgment performed on the basis of the measured degree of difference.

**17.** A program-recorded medium according to Claim 16, characterized in that the signature data includes time-series data in relation to coordinates of handwritten characters and writing pressure.

**Amended claims under Art. 19.1 PCT**

**TRANSLATION OF ANNEXES TO THE INTERNATIONAL PRELIMINARY EXAMINATION REPORT**

collating the verification signature data with the registered signature data and signature data used in the past, both stored in the IC card, wherein when the verification signature data coincides with the registered signature data or the signature data used in the past, re-singing is required, or the authentication is denied.

8. A program-recorded medium according to Claim 7, characterized in that the signature data used in the past are stored in a compressed and converted form.
9. A program-recorded medium according to Claim 7 or 8, characterized in that the signature data includes time-series data in relation to coordinates of handwritten characters and writing pressure.
10. A signature-authentication-type IC card, characterized in that the IC card can store registered signature data and signature data used in the past.
11. A signature-authentication-type IC card according to Claim 10, characterized in that the signature data used in the past are stored in a compressed and converted form.
12. (amended) A method for authenticating an IC card storing registered signature data according to Claim 1, characterized by comprising the steps of:

(1) measuring a degree of difference obtained from differences in respective elements between verification signature data and registered signature data stored in the IC card; and
(2) updating the registered signature data by use of data obtained through weighted averaging of the registered signature data and verification signature data permitted by authentication judgment performed on the basis of the measured degree of difference.

13. A method for authenticating an IC card according to Claim 1, characterized in that the signature data includes time-series data in relation to coordinates of handwritten characters and writing pressure.
14. (amended) An apparatus for authenticating an IC card storing registered signature data according to Claim 4, characterized by comprising:

(1) means for measuring a degree of difference obtained from differences in respective elements between verification signature data and registered signature data stored in the IC card; and
(2) means for updating the registered signature data by use of data obtained through weighted averaging of the registered signature data and verification signature data permitted by authentication judgment performed on the basis of the measured degree of difference.

15. An apparatus for authenticating an IC card according to Claim 14, characterized in that the signature data includes time-series data in relation to coordinates of handwritten characters and writing pressure.
16. (amended) A medium on which is recorded a program for authenticating an IC card in which are stored registered signature data, the program

(1) measuring a degree of difference obtained from differences in respective elements between verification signature data and registered signature data stored in the IC card;
(2) judging, on the basis of the measured degree of difference, whether the IC card is to be authenticated, and collating the verification signature data with the registered signature data and signature data used in the past, both stored in the IC card, wherein when the verification signature data coincides with the registered signature data or the signature data used in the past, re-singing is requested, or the authentication is denied;

(3) measuring a degree of difference obtained from differences in respective elements between verification signature data and registered signature data stored in the IC card; and

(4) updating the registered signature data by use of data obtained through weighted averaging of the registered signature data and verification signature data permitted by authentication judgment performed on the basis of the measured degree of difference.

17. A program-recorded medium according to Claim 16, characterized in that the signature data includes time-series data in relation to coordinates of handwritten characters and writing pressure.

EP 1 020 817 A1

# FIG.1

HANDWRITTEN CHARACTER
RECOGNITION APPARATUS   20

ELECTRONIC PEN 10

25
CPU

MEMORY     26

27  OS
28  VERIFICATION PROGRAM
29  REGISTRATION/ UPDATE PROGRAM
30  WORK AREA

21
TABLET I/F

22
IC CARD I/F

23
DISPLAY I/F

24
COMMUNICATION PORT

COMMUNICATION LINE

ELECTRONIC TABLET 11

IC CARD
READER/WRITER 12

IC CARD 13

DISPLAY DEVICE 14

# FIG.2

COINCIDENCE
RATE IS HIGH

COINCIDENCE
RATE IS LOW

THRESHOLD OF S1   THRESHOLD OF S2

STABLE
SIGNATURE S1

FREQUENCY

UNSTABLE
SIGNATURE S2

DEGREE OF
DIFFERENCE

14

FIG.3

# FIG.4

START

S1 READ IC CARD INFORMATION

U1 SIGNING BY USER
(CREATE VERIFICATION SIGNATURE DATA S')

S2
SW = 0
SWP = 0
C = 0
Cmax = 2

D1 SW = 0 ? —no→ T1 POST PROCESSING → END

yes

S3 COLLATE S WITH S'

D2 RESULT OF VERIFICATION
FAILED / PASSED

S4
SW = 1
SWP = 0

S5 CREATE MD OF S'

S6 COLLATE MD WITH HISTORICAL SIGNATURE DATA SET

D3 COINCIDENTAL DATA EXIST ?
NO / YES

S7
SW = 1
SWP = 1

C = C+1

C ≤ Cmax ?
no / yes

S8
SW = 1
SWP = 0

U2 RE-SIGNING BY USER
(CREATE VERIFICATION SIGNATURE DATA S')

# FIG.5

T1

POST
PROCESSING

(ENTRANCE)

D2

no — SWP = 1 ? — yes

S1

INQUIRE RELIABILITY
BY COMMUNICATION

D1

no — RELIABLE ? — yes

S2

SWP = 0

D3

no — SWP = 1 ? — yes

S3

DENY
TRANSACTION
BY USE OF CARD

S4

APPROVE
TRANSACTION
BY USE OF CARD

S5

REGISTER
MD OF S'
IN IC CARD

( EXIT )

# FIG.6

| MOVING TIME OF PEN | POSITIONAL COORDINATES OF PEN | | WRITING PRESSURE | CHECK SUM | |
|---|---|---|---|---|---|
| $t$ | $x$ | $y$ | $p$ | $c$ | |
| $t_1$ | $x_1$ | $y_1$ | $p_1$ | $c_1$ | ⎫ |
| $t_2$ | $x_2$ | $y_2$ | $p_2$ | $c_2$ | ⎪ |
| $t_3$ | $x_3$ | $y_3$ | $p_3$ | $c_3$ | ⎬ MD (MESSAGE DIGEST) |
| ⋮ | ⋮ | ⋮ | ⋮ | ⋮ | ⎪ |
| $t_N$ | $x_N$ | $y_N$ | $p_N$ | $c_N$ | ⎭ |

# FIG.7

| | N | K |
|---|---|---|
| 1 | $TS_1$ | $MD_1$ |
| 2 | $TS_2$ | $MD_2$ |
| 3 | $TS_3$ | $MD_3$ |
| | ⋮ | ⋮ |
| k | $TS_k$ | $MD_k$ |
| | ⋮ | ⋮ |
| | ⋮ | ⋮ |
| N | $TS_N$ | $MD_N$ |

# FIG.8

START

READ IC CARD INFORMATION  S1  · · · INPUT REGISTERED SIGNATURE DATA A

SIGNING BY CUSTOMER  U1  · · · INPUT VERIFICATION SIGNATURE DATA B

COLLATE A WITH B  S2

D1 RESULT OF VERIFICATION

FAILED / PASSED

INQUIRE RELIABILITY BY COMMUNICATION  S4

D2 RELIABLE?  NO / YES

DENY TRANSACTION  S3

DENY TRANSACTION  S5

APPROVE TRANSACTION  S6

REFLECT B IN A, AND UPDATE IC CARD  S7

END

# FIG.9

COINCIDENCE RATE IS HIGH

COINCIDENCE RATE IS LOW

CUMULATIVE ERROR OF B   THRESHOLD

FREQUENCY

DEGREE OF DIFFERENCE

AREA IN WHICH PERSON IS AUTHENTICATED

AREA IN WHICH PERSON IS NOT AUTHENTICATED

## INTERNATIONAL SEARCH REPORT

| | International application No. |
|---|---|
| | PCT/JP98/04422 |

**A. CLASSIFICATION OF SUBJECT MATTER**
Int.Cl⁶  G06T7/00

According to International Patent Classification (IPC) or to both national classification and IPC

**B. FIELDS SEARCHED**

Minimum documentation searched (classification system followed by classification symbols)
Int.Cl⁶  G06T7/00

Documentation searched other than minimum documentation to the extent that such documents are included in the fields searched
Jitsuyo Shinan Koho          1940-1998    Toroku Jitsuyo Shinan Koho    1994-1998
Kokai Jitsuyo Shinan Koho    1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 5-81489, A (Hitachi Seiko, Ltd.), 2 April, 1993 (02. 04. 93) (Family: none) | 1-17 |
| A | JP, 6-259451, A (Kyocera Corp.), 16 September, 1994 (16. 09. 94) (Family: none) | 1-17 |
| X | JP, 8-315138, A (Nippondenso Co., Ltd.), 29 November, 1996 (29. 11. 96) (Family: none) | 12, 14, 16 |
| X | JP, 2-263275, A (Cadix Inc.), 26 October, 1990 (26. 10. 90) (Family: none) | 12, 14, 16 |
| Y | JP, 8-315138, A (Nippondenso Co., Ltd.), 29 November, 1996 (29. 11. 96) (Family: none) | 13, 15, 17 |
| Y | JP, 2-263275, A (Cadix Inc.), 26 October, 1990 (26. 10. 90) (Family: none) | 13, 15, 17 |

| ☒ Further documents are listed in the continuation of Box C. | ☐ See patent family annex. |
|---|---|

\*    Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 11 December, 1998 (11. 12. 98) | 22 December, 1998 (22. 12. 98) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

| International application No. |
| --- |
| PCT/JP98/04422 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP, 3-108018, A (International Business Machines Corp.),<br>8 May, 1991 (08. 05. 91)<br>& EP, 418537, A2 & US, 5054088, A | 3, 6, 9, 13, 15, 17 |

Form PCT/ISA/210 (continuation of second sheet) (July 1992)